# EUROPÄISCHE PATENTANMELDUNG

(11) **EP 2 070 884 A2**
(43) Veröffentlichungstag der Anmeldung: **17.06.2009**
(21) Anmeldenummer: 08020929.9
(22) Anmeldetag: 03.12.2008
(51) Int. Cl.: C03B 35/18

(54) **Transportvorrichtung und Ofenanlage mit einer solchen**

(30) Priorität: 07.12.2007 DE 202007017199 U
(71) Anmelder: Seidel Holding GmbH, 58526 Ennepetal (DE)
(72) Erfinder: Die Erfindernennung liegt noch nicht vor
(74) Vertreter: Patentanwälte Buse, Mentzel, Ludewig

(57) **Zusammenfassung**

Die Erfindung betrifft eine Transportvorrichtung (10) für Waren (20), insbesondere aus Flachglas. Die Transportvorrichtung (10) weist dabei eine oder mehrere Walzen (11) in Form von im Wesentlichen zylinderförmigen Körpern auf, welche drehbar gelagert sind und für den Transport der Waren geeignet sind. Die Erfindung schlägt nun vor, die Walzen (11) ballig (12) auszuführen, wobei durch die Durchbiegung der Walzen (11) aufgrund ihres Eigengewichts die Oberseite der Transportvorrichtung (10) eine waagerechte Oberfläche aufweist (Fig. 2).

## Beschreibung

Die Erfindung betrifft eine Vorrichtung der im Oberbegriff des Anspruches 1 genannten Art. Solche Transportvorrichtungen finden vielfach Verwendung, insbesondere auch in der Glasindustrie. Hiermit werden häufig Waren aus Flachglas transportiert. Solche Flachglaswaren können relativ große Ausmaße annehmen, weswegen auch entsprechend große Transportvorrichtungen notwendig sind. Hierzu müssen die Walzen entsprechend länger ausgestaltet werden. Wenn die Walzen zu lang werden, verformen sie sich jedoch durch ihr Eigengewicht. Infolgedessen nehmen auch die auf den Walzen befindlichen Flachglaswaren die entsprechende durchgebogene Form an. Dies ist jedoch unerwünscht und vermindert die Qualität des Flachglases.

Die Erfindung betrifft weiterhin eine Ofenanlage nach dem Oberbegriff des Anspruches 4. Solche Ofenanlagen werden insbesondere in der Glas- und glasverarbeitenden -Industrie häufig eingesetzt, beispielsweise als Kühl- und Entspannungsofen oder andere Öfen für die Glasverarbeitung. Diese als Durchlauföfen konzipierten Öfen besitzen dann eine oder mehrere Transportvorrichtungen für die entsprechenden Waren.

Das Dokument DE 36 37 759 A1 beschreibt einen Heizofen für Glasscheiben, bei welchem Glasscheiben auf einer horizontalen Ebene auf einer Reihe von Rollen durch den Ofen transportiert werden. Diese Rollen weisen jedoch eine zylindrische Form auf. Durch das Eigengewicht der Rollen biegen diese sich durch, wodurch keine gleichmäßige Auflage der Glasscheiben auf den Transportrollen erzielt wird.

Die Dokumente DE 195 04 044 A1 sowie die DE 39 24 277 C1 beschreiben jeweils keramische Transportrollen, insbesondere für Durchlauföfen in der Glasindustrie. Auch diese Rollen sind zylindrisch ausgeführt und besitzen daher die bereits erwähnten Nachteile, die sich beim Durchbiegen einstellen.

Aufgabe der Erfindung ist es daher, eine Transportvorrichtung mit Walzen zu schaffen, bei welcher die Oberseite der Transportvorrichtung im Betrieb waagerecht bleibt und somit keine Qualitätsverluste der transportierten Waren entstehen. Diese Aufgabe wird durch die kennzeichnenden Merkmale des Anspruches 1 gelöst, dem folgende besondere Bedeutung zukommt.

Die Walzen der Vorrichtung werden ballig ausgeführt und zwar genauso viel wie es nötig ist, um die Biegeverformung durch das Eigengewicht und des zu transportierenden Glases auszugleichen. Somit entsteht eine Transportvorrichtung mit waagerechter Oberseite, auf welcher die Waren, insbesondere Flachglaswaren, sich nicht durchbiegen.

Besonders vorteilhaft ist es, die Walzen überwiegend aus Keramik herzustellen. Dabei können die Walzen vollständig aus Keramik bestehen oder nur die Oberfläche der Walzen aus Keramik ausgeführt sein. Dieses Material hat sich besonders bewährt, da es hitzebeständig ist und auf den zu transportierenden Waren keine Ablagerungen oder Verunreinigungen hervorruft. In diesem Zusammenhang haben sich insbesondere Keramiken bewährt, die ganz oder überwiegend aus Siliziumdioxid besteht.

Aufgabe der Erfindung ist es weiterhin, eine Ofenanlage zu schaffen, welche über eine Transportvorrichtung verfügt, bei der sich die Oberseite im Betrieb waagerecht ist. Diese Aufgabe wird durch die Merkmale des Anspruches 4 gelöst, denen folgende besondere Bedeutung zukommt.

Die Transportvorrichtungen nach den Ansprüchen 1 bis 3 verfügen durch die Balligkeit der Walzen über eine ebene Oberfläche, auf welcher sich die Flachglaswaren nicht durchbiegen und verformen. Lässt man die Waren nun über eine solche Transportvorrichtung die Ofenlage passieren, so bleibt auch bei diesem Prozess die Form der Waren erhalten und sie biegen sich nicht durch.

Weitere Vorteile der Erfindung ergeben sich aus der nachfolgenden Beschreibung, den Unteransprüchen und den Zeichnungen. In den Zeichnungen ist die Erfindung in zwei Figuren dargestellt. Es zeigen:
- Fig. 1: ein erfindungsgemäßes Transportband in Seitenansicht und
- Fig. 2: eine Ofenanlage mit dem erfindungsgemäßen Transportband in Vorderansicht.

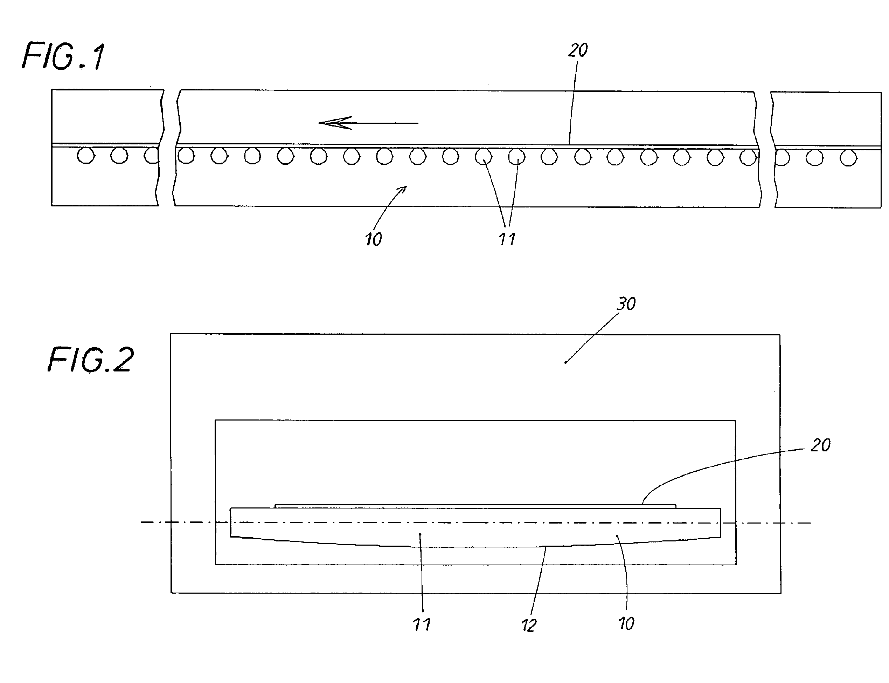

In Fig. 1 ist eine erfindungsgemäße Transportvorrichtung 10 in Seitenansicht dargestellt. Man erkennt eine Vielzahl von Walzen 11, über die die Waren 20, hier aus Flachglas bestehend, transportiert werden. Die Transportrichtung erfolgt hier in Richtung der linken Figurenseite. Da die Walzen 11 ballig ausgeführt sind, ist die Oberseite der Transportvorrichtung 10 waagerecht und die Durchbiegung der Walzen 11 hat keinen Einfluss auf die Form der Waren 20. Somit bleibt auch die Form der Flachglaswaren 20 erhalten, welche sich bei einem Durchbiegen der Oberseite der Walzen 11 ebenfalls durchbiegen würden.

Fig. 2 zeigt eine erfindungsgemäße Ofenanlage 30, in welcher sich eine Transportvorrichtung 10 befindet. Die Transportvorrichtung 10 besteht aus mehreren Walzen 11, von denen hier nur eine sichtbar ist. Man erkennt deutlich, dass die Oberseite der Walze 11 eben ist, während diese an der Unterseite durchgebogen und gewölbt ist. Diese spezielle Geometrie entsteht dadurch, dass die Walze 11 ballig 12 ausgeführt ist. Durch die Durchbiegung der Walze 11 aufgrund ihres Eigengewichtes und des Gewichts der Waren 20 ist dann die Oberfläche eben, während die Unterseite der Walze 11 durchgebogen ist. Durch diese Geometrie können die Waren 20 sicher und ohne Deformation durch die Ofenanlage 30 geführt werden.

Abschließend sei bemerkt, dass es sich bei den hier dargestellten Ausführungsformen nur um beispielsweise Verwirklichungen der Erfindung handelt. Diese ist nicht darauf beschränkt. Es sind vielmehr noch weitere Abwandlungen und Ausgestaltungen möglich.

### Bezugszeichenliste

- 10: Transportvorrichtung
- 11: Walze
- 12: Ballig
- 20: Ware
- 30: Ofenanlage

## Patentansprüche

1. Transportvorrichtung (10) für Waren (20), insbesondere für Waren aus Flachglas,
mit einer oder mehreren Walzen (11) in Form von im Wesentlichen zylinderförmigen Körpern, welche drehbar gelagert sind und die Waren transportieren können
**dadurch gekennzeichnet,**
**dass** die Walzen (11) ballig (12) ausgeführt sind, wobei durch die Durchbiegung der Walzen (11) aufgrund ihres Eigengewichts die Oberseite der Transportvorrichtung (10) eine waagerechte Oberfläche aufweist.

2. Transportvorrichtung nach Anspruch 1, **dadurch gekennzeichnet, dass** die Walzen überwiegend aus Keramik bestehen.

3. Transportvorrichtung nach Anspruch 2, **dadurch gekennzeichnet, dass** die Keramik der Walze überwiegend aus Siliziumdioxid besteht.

4. Ofenanlage insbesondere für die Glas- oder Keramikindustrie,
mit einer oder mehreren Transportvorrichtungen durch welche Waren durch die Ofenanlage führbar sind,
**dadurch gekennzeichnet,**
**dass** wenigstens eine der Transportvorrichtungen gemäß einem oder mehreren der Ansprüche 1 bis 3 ausgeführt ist.
